Europäisches Patentamt

European Patent Office

Office européen des brevets

(11) Numéro de publication: **0 005 660**

A1

(19)

(12)
# DEMANDE DE BREVET EUROPEEN

(21) Numéro de dépôt: 79400288.1

(22) Date de dépôt: 07.05.79

(51) Int. Cl.²: **B 65 B 67/12**
B 65 F 5/00, B 65 B 9/10

(30) Priorité: 12.05.78 FR 7814117

(43) Date de publication de la demande:
28.11.79 Bulletin 79/24

(84) Etats Contractants Désignés:
AT BE CH DE GB IT LU NL SE

(71) Demandeur: Société Civile d'Innovations
Développement et Organisation SCIDO
3 Place des Halles
F-28000 Chartres(FR)

(72) Inventeur: Buisson, Marcel
3 Place des Halles
F-28000 Chartres(FR)

(72) Inventeur: Ballereaud, Pierre

F-28360 Dammarie(FR)

(74) Mandataire: Rataboul, Michel
Cabinet Michel Rataboul 69, rue de Richelieu
F-75002 Paris(FR)

(54) **Dispositif pour le conditionnement d'objets dans une gaine tubulaire continue et comprenant un mécanisme d'entraînement positif de la gaine.**

(57) 1- Dispositif de conditionnement de divers objets dans des fractions de gaine tubulaire continue fermées transversalement.

2. Le dispositif comprend un mandrin (6) et un mécansime apte au pincement ainsi qu'à la traction de la gaine (A) stockée autour du mandrin (6). Les dimensions du mandrin (6) sont choisies pour que la hauteur (H) mesurée entre le sommet du mandrin (6) et le mécanisme de pincement donne un volume utile de remplissage correct.

3- Conditionnement de déchets ménagers, d'articles vendus dans les magasins, de vêtements nettoyés, etc......

FIG.4

EP 0 005 660 A1

- 1 -

Dispositif pour le conditionnement d'objets dans une
gaine tubulaire continue et comprenant un mécanisme
d'entrainement positif de la gaine.

On connait depuis longtemps des dispositifs pour le conditionnement d'objets dans une gaine tubulaire continue en vue de
constituer des emballages fragmentés par coupures transversales de ladite gaine continue après son remplissage.

Il s'agit de dispositifs techniques précis fonctionnant automatiquement pour le conditionnement d'objets tous identiques.
Cela peut être, par exemple, des bonbons, des liquides, des
poudres, etc...

La présente invention se réfère à un dispositif de conditionnement qui utilise, lui aussi, une gaine tubulaire mais il
s'agit de réaliser des appareils plus  rustiques et destinés
à être installés dans des endroits qui ne sont pas des usines
de production susceptibles de s'équiper de chaînes automatiques.

Par ailleurs, le brevet américain  3.452.368 décrit un dispositif comprenant  un mandrin creux à l'intérieur duquel s'étend une gaine dont la partie non utilisée est stockée autour
de ce mandrin.

Mais avec ce dispositif, le volume n'est pas déterminé par
les dimensions du mandrin mesurées le long de son axe, entre
son sommet et un dispositif de fermeture transversale. En
effet, le volume n'est déterminé que par la longueur des bras
32 et 38 (colonne 4 lignes 3 à 5).

0005660

- 2 -

En outre, la gaine est déroulée en la maintenant immobile tandisqu'on lève le mandrin, puis en abaissant ensuite le mandrin (colonne 4 lignes 34 à 42).

De plus, la gaine n'est pas soudée (ou fermée par un autre moyen) comme cela est indiqué colonne 4, lignes 18 à 22, car elle n'est fermée que temporairement ainsi que cela est précisé colonne 5 ligne 2.

Il s'agit donc seulement d'un mécanisme de valve (ou de sas) par lequel on isole les ordures déjà jetées de l'extérieur. On note qu'il faut faire une manoeuvre de déroulement de la gaine chaque fois que l'on jette quelque chose dans la gaine car il est bien précisé que la gaine est entraînée "pas à pas" colonne 5, ligne 5.

Enfin, il faut remarquer que le dispositif décrit dans ce brevet américain est essentiellement un WC portatif, ce qui implique qu'il doit toujours y avoir un espace important entre le fond de la gaine pincée et le sommet du mandrin qui constitue une lunette sur laquelle s'assied la personne.

Il est donc hors de question de remplir la gaine en plusieurs fois et jusqu'à ce que, par accumulation, la gaine se trouve remplie selon tout le volume intérieur du mandrin, ce qui est une caractéristique de l'invention.

L'invention se différencie de cette antériorité en ce que le mandrin sert à mesurer le volume de remplissage à l'intérieur de la gaine et en ce que la gaine remplie est tirée, positivement, lorsque le volume voulu est déjà rempli.

Ceci a pour avantage que la mise en position correcte de la gaine en vue de sa fermeture et de sa coupure est assurée, quel que soit le poids des objets mis à l'intérieur, c'est-à-dire même si ces objets sont très légers. Un autre avantage de ce dispositif résulte du fait que la soudure de la gaine se fait sur une partie propre puisque celle-ci était située à l'extérieur du mandrin lorque l'on a jeté les objets à l'intérieur de la gaine.

D'autres différences essentielles entre ces dispositifs connus
et la présente invention résident dans les moyens de dosage et
dans le fait que la gaine reste immobile et statique pendant
le remplissage, la fermeture et la coupe.

L'invention concerne des appareils qui, par ailleurs, doivent
utiliser de la gaine tubulaire de diamètre plus important que
celles connues dans les dispositifs de conditionnement évoqués
plus haut.

Le dispositif conforme à l'invention utilise la gaine tubulaire sous toute forme voulue (naturelle, plissée, pliée, préparée, etc...) mais avantageusement stockée sous un faible volume pour une longueur beaucoup plus
importante que celle d'un emballage unitaire sans, toutefois, être de longueur infinie comme cela peut être le cas lorsque le dispositif de conditionnement utilise une gaine en aval d'une machine qui produit cette gaine
à partir de matière synthétique extrudée.

Un dispositif conforme à l'invention comprend donc obligatoirement un mandrin autour duquel une certaine longueur de gaine
est éventuellement stockée pour être consommée pas à pas, ce
mandrin devant servir d'étalon au dosage des objets à emballer.

Dans des appareils de ce genre, il est indispensable de parvenir à une construction très simple, très solide et très bon
marché. En effet, ces dispositifs sont destinés à être utilisés
par des personnes qui ne sont pas des professionnels. Ces personnes peuvent, par exemple, être des ménagères pour le conditionnement des déchets ménagers ou des caissières de magasins
pour le conditionnement des objets achetés par les clients,
etc...

Le but que se propose la présente invention est de parvenir à
un dispositif de ce type qui soit à la fois simple, solide et
bon marché tout en assurant un service sûr.

L'invention sera bien comprise par la description détaillée
ci-après faite en référence au dessin annexé. Bien entendu la
description et le dessin ne sont donnés qu'à titre d'exemple
indicatif et non limitatif.

La figure 1 est une vue schématique en coupe d'un premier mode de réalisation d'un dispositif conforme à l'invention.

La figure 2 est une vue schématique montrant un détail de construction.

Les figures 3 à 10 sont des vues schématiques en coupe montrant un cycle complet de fonctionnement du dispositif.

La figure 11 montre schématiquement en coupe une variante de réalisation selon laquelle le dispositif est relié à une conduite d'évacuation.

La figure 12 est une vue schématique montrant un élément de guide à deux circuits de longueurs différentes pour la constitution d'emballages de deux dimensions différentes.

La figure 13 est une vue schématique en coupe montrant le mécanisme de pincement transversal de la gaine et sa liaison avec le guide.

La figure 14 montre deux mandrins interchangeables de diamètres différents.

La figure 15 montre un mandrin fixe et une cheminée réductrice de volume, amovible.

La figure 16 est une vue schématique en coupe d'un dispositif selon l'invention équipé d'un mandrin fixé par une collerette supérieure.

La figure 17 montre en coupe les mécanismes de pincement, de soudure et de coupe.

La figure 18 est un schéma électrique d'un dispositif conforme à l'invention.

En se reportant au dessin, on voit qu'un dispositif conforme à l'invention peut être réalisé sous forme d'un meuble de cuisine complet comprenant une carrosserie dont les dimensions sont normalisées pour s'adapter exactement aux autres éléments modernes.

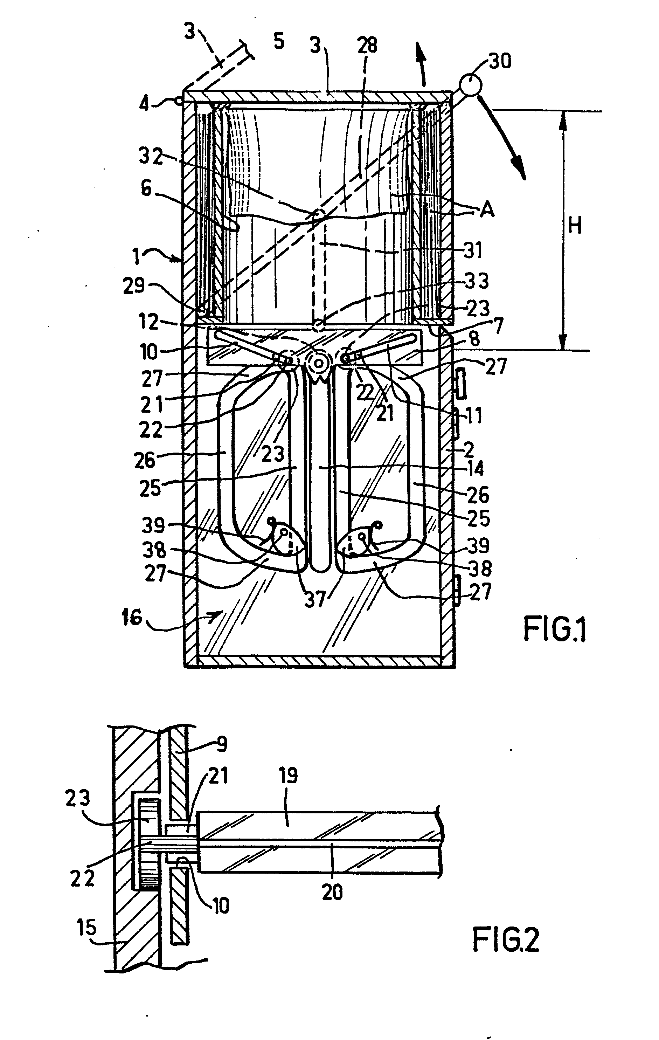

Ainsi, on voit sur la figure 1 qu'un tel meuble comprend un châssis général 1, fermé sur sa façade par une porte 2 et à sa partie supérieure par un couvercle 3 monté pivotant autour d'une charnière 4, muni intérieurement d'un joint 5.

Sous le couvercle 3 se trouve un mandrin creux 6 fixé, au droit d'une ouverture, sur un support horizontal 7 éventuellement amovible, le joint 5 se plaçant exactement sur le bord supérieur de ce mandrin 6 quand le couvercle 3 est fermé.

Autour de ce mandrin 6, doit être placée une réserve de gaine tubulaire en matière synthétique qui est, ici, représentée sous la forme d'une gaine pliée transversalement A, ainsi que cela est connu en soi. L'extrémité libre de cette gaine est engagée dans le mandrin 6, de sorte que la gaine est maintenue béante, apte à recevoir les objets à emballer.

Selon l'invention, se trouve au-delà immédiat de la base du mandrin, un mécanisme apte au pincement linéaire transversal de la gaine (qui sera décrit en détail plus loin). Ainsi, on détermine un volume utile maximum de hauteur H (depuis le sommet du mandrin 6 jusqu'au mécanisme de pincement) et de section égale à celle, intérieure, du mandrin 6. Le mécanisme apte au pincement est mobile afin de déplacer la gaine par longueurs successives mesurées, mais il est maintenu immobile et en position active, au niveau indiqué, pendant tout le remplissage du volume utile. Le mécanisme apte au pincement est, selon l'invention, combiné avec les mécanismes aptes à la fermeture transversale et à la coupe de la gaine.

Comme on le sait, la soudure et la coupe transversale d'une gaine tubulaire permettent d'obtenir successivement des emballages indépendants qui sont constitués chacun par une fraction de gaine et délimités par deux zones parallèles de fermetures obtenues, ici, par soudure.

Selon l'invention, ces trois mécanismes de fermeture, de coupe et de pincement sont montés sur un ensemble mobile qui est associé à un guide parallèle à l'axe de la gaine A et qui est relié à un élément moteur susceptible de déplacer cet ensemble entre deux positions extrêmes, décalées au-delà du mandrin 6 le long de l'axe virtuel du mandrin 6 (et, par conséquent, de l'axe virtuel de la gaine A).

Dans le mode de réalisation décrit ici, l'ensemble mobile est composé de deux flasques latéraux 8 et 9 dans chacun desquels sont prévues deux lumières 10 et 11 qui sont inclinées vers le centre du dispositif et vers son aval en considérant le sens dans lequel la gaine A doit être déplacée c'est-à-dire, sur la figure 1, vers le bas.

Chacun des flasques latéraux 8 et 9 comprend un galet 12 monté fou sur un axe 13, ce galet 12 étant engagé dans un sillon 14 prévu dans chacune des deux parois latérales 15 et 16 du dispositif, ce sillon 14 ayant une largeur supérieure au diamètre du galet 12.

Par ailleurs, le mécanisme apte au pincement linéaire transversal de la gaine A est constitué par une mâchoire composée de deux éléments transversaux à l'axe de la gaine A, dont la longueur est au moins égale au diamètre de la gaine A ouverte et susceptibles d'être écartés l'un de l'autre sur une distance, elle aussi, au moins égale au diamètre de la gaine ouverte A. Ces deux éléments de mâchoire peuvent également être rapprochés l'un contre l'autre avec une force de serrage supérieure à la résistance que la gaine A oppose à son déplacement axial.

Dans le mode de réalisation décrit ici, on garantit que la force de serrage sera suffisante en prévoyant que l'un des éléments de la mâchoire comprend un relief susceptible de pénétrer dans un logement correspondant prévu sur l'autre élément.

Sur les figures 2 à 11, 13 et 17, on voit que l'élément de mâchoire 17 comprend une partie mâle 18 constituée par une lame de caoutchouc dur tandisque l'élément de mâchoire 19 comprend une mortaise 20 dans laquelle l'élément mâle 18 doit pénétrer lorsque les éléments 17 et 19 sont rapprochés l'un contre l'autre ainsi que cela sera expliqué en détail plus loin.

Chaque extrémité des éléments 17 et 19 de la mâchoire est munie d'un pion 21 dont les dimensions et l'orientation sont convenablement choisies pour que chacun de ces pions 21 puissent pénétrer et coulisser librement dans l'une des lumières 10 et 11 des flasques 8 et 9 correspondants.

En outre, chacune des extrémités des éléments 17 et 19 de la mâchoire est munie d'un axe fixe 22 sur lequel est monté fou un galet 23.

Sur les parois latérales internes du dispositif, c'est-à-dire sur les mêmes parois que celles sur lesquelles sont prévus les sillons verticaux 14, sont prévus, de part et d'autre de ce dernier, deux sillons fermés sur eux-mêmes en boucle.

Ainsi le dispositif comprend deux paires de sillons, si l'on appelle paire les deux sillons qui se font face en étant prévus respectivement sur la paroi 15 et sur la paroi 16.

Chaque boucle comprend deux brins voisins 25 situés de part et d'autre du sillon 14 et deux brins opposés 26, les brins rectilignes 25 et 26 étant raccordés l'un à l'autre par des segments courbes 27.

Chacun de ces sillon en boucle constitue un élément latéral de guide pour les éléments de mâchoire 17 et 19 car les galets 23 sont engagés chacun dans l'un de ces sillons.

On note que les sillons sont d'une part symétriques l'un par rapport à l'autre quand on les considère sur un même côté latéral du dispositif et identiquement orientés lorsque l'on considère l'un sur la paroi 15 et son correspondant sur la paroi 16.

Comme il en est de même pour le sillon vertical unique et linéaire 14, on comprend que les deux parois latérales 15 et 16 sont, dans la pratique, deux parois identiques placées face à face, ce qui représente une grande simplicité de fabrication.

- 8 -

Enfin, le dispositif comprend un élément moteur qui est constitué par au moins un levier latéral extérieur monté pivotant à l'une de ses extrémités et muni d'une biellette qui est articulée d'une part sur ce levier et d'autre part sur l'ensemble mobile.

Dans le mode de réalisation représenté ici, cet élément moteur comprend deux leviers 28 montés sur un axe fixe 29 et réunis par leur extrémité libre au moyen d'une barre de manoeuvre 30. Chaque levier 28 reçoit une biellette 31 qui est articulée d'une part sur ce levier 28 autour d'un pivot 32 et d'autre part sur un pivot 33 à la partie supérieure et au milieu de chaque flasque 8 et 9.

Le fonctionnement du dispositif qui vient d'être décrit dans ses grandes lignes, est le suivant :

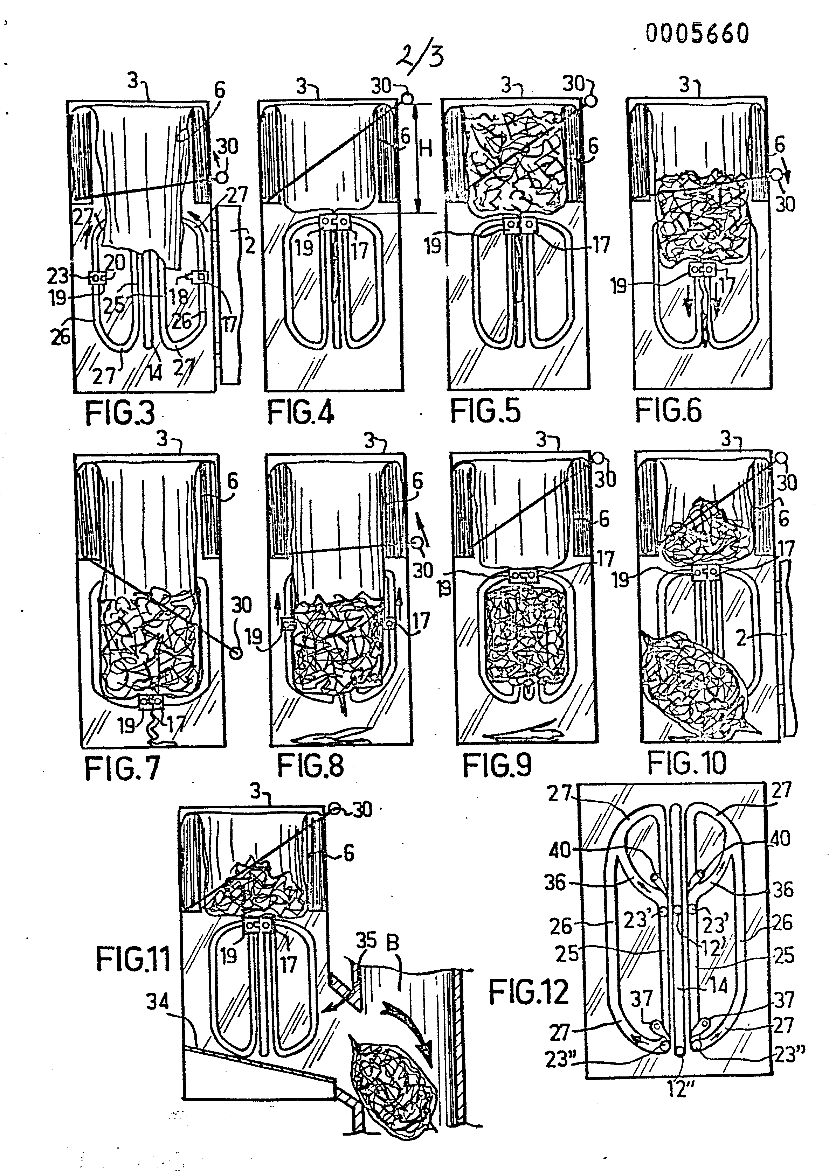

Au moment de la première mise en route du dispositif, on ouvre le couvercle 3 et l'on place autour du mandrin 6 une certaine réserve de gaine A. On saisit l'une des extrémités de cette gaine et on la fait passer à l'intérieur du mandrin 6 afin qu'elle s'étende vers le centre et vers le bas sur une distance arbitraire mais qui, de toutes façons, doit être telle que l'extrémité libre de la gaine A est située au-dessous du niveau supérieur des sillons (figure 3).

Pour que ceci soit possible, il est indispensable que les éléments 17 et 19 de la mâchoire soient écartés et, pour cela, on actionne la barre de manoeuvre 30 vers le bas afin que les leviers 28 s'abaissent en pivotant autour de leurs axes 29, ce qui a pour effet d'abaisser les biellettes 31 lesquelles, à leur tour, abaissent les flasques 8 et 9.

Les flasques 8 et 9 sont guidés dans leur mouvement d'abaissement par les galets 12 qui s'étendent dans les sillons 14 sans qu'il y ait de blocage, grâce au fait que leur diamètre est quelque peut inférieur à la largeur de ces sillons 14. Simultanément, les galets 23 s'abaissent dans les segments 25 qui constituent leurs guides et, en continuant d'abaisser la poignée de manoeuvre 30, on oblige les galets 23 à atteindre la base des sillons 25 c'est-à-dire les segments courbes inférieurs 27. Ayant atteint ce point bas extrême, on soulève la barre de manoeuvre 30, ce qui a pour effet de tirer vers le haut, par les biellettes 31, les flasques 8 et 9 et les éléments 17 et 19 de la mâchoire sont eux-mêmes tirés vers le haut du fait que les pions 21 sont engagés dans les lumières 10 et 11. Ces lumières étant inclinées vers le haut et vers l'extérieur, les pions 21 peuvent sans difficulté coulisser à l'intérieur de ces lumières et emprunter pour remonter non plus les brins voisins 25 mais les brins opposés 26 de sorte que les éléments 17 et 19 de la mâchoire sont écartés de la même distance que celle qui sépare les brins opposés 26 alors que lorsque les galets 23 étaient dans les brins voisins 25, les éléments 17 et 19 de la mâchoire étaient serrés l'un contre l'autre, l'élément mâle 18 étant inséré dans l'élément femelle qui lui fait face 20.

Les éléments 17 et 19 de la mâchoire étant dans les brins opposés 26, il est possible d'engager l'extrémité libre de la gaine A (éventuellement on peut s'assurer que cette extrémité est bien placée, en ouvrant la porte 2 pour avoir une bonne visibilité). On termine alors le mouvement de redressement de la barre de manoeuvre 30 de telle manière que les galets 23 atteignent les segments courbes supérieurs 27 puis se trouvent, comme représentés sur la figure 1, dans leur position de rapprochement extrême ce qui a pour effet de pincer la gaine A et de la bloquer ainsi très énergiquement, du fait que l'élément mâle 18 fait pénétrer avec lui ladite gaine A dans la rainure 20 (figure 4).

Lorsque les éléments 17 et 19 de la mâchoire sont dans cette position, un contact électrique provoque une double soudure et la coupure de la gaine A entre ces deux soudures parallèles ainsi que cela sera décrit en détail plus loin.

Dans cette même position, il suffit d'ouvrir le couvercle 3 pour avoir un accés direct à l'intérieur de la gaine A qui est maintenue béante par le mandrin 6. On peut ainsi, dans l'application ici représentée, placer à l'intérieur de la gaine les divers déchets ménagers (ordures ménagères, vieux papiers).

On voit que le mandrin 6, selon son diamètre et selon sa hauteur H mesurée jusqu'au niveau des éléments 17 et 19 en position supérieure de serrage, détermine un volume assez précis qui est celui que l'on veut donner à l'emballage plein. Il est facile de voir que ce volume est atteint quand les objets (ici des déchets ménagers) atteignent le niveau supérieur du mandrin 6 (au-dessus de ce niveau, les objets empêcheraient la fermeture complète du couvercle 3).

A ce moment, il faut évacuer l'emballage plein et prévoir un nouvel emballage neuf, vide (figure 5). Pour cela, il suffit d'abaisser la barre de manoeuvre 30 qui provoque, corrélativement, la traction vers le bas de la gaine A pincée entre les éléments 17 et 19 de la mâchoire (figure 6).

On conduit, ainsi, la gaine A jusqu'à la position basse extrême des galets 23 dans les brins 25, ce qui provoque l'extraction de gaine neuve et propre hors du mandrin 6 (figure 7).

A ce moment, on remonte la barre de manoeuvre 30, ce qui a pour effet d'élever les éléments 17 et 19 de la mâchoire tout en les écartant l'un de l'autre, du fait que les galets 23 empruntent les brins opposés 26 (figure 8).

Lorsque la barre de manoeuvre 30 est à son point haut extrême, les éléments 17 et 19 de la mâchoire sont en position de serrage et de pincement de la gaine. Le contact électrique voulu (qui sera décrit plus en détail dans la suite de cette description) est établi pour provoquer la soudure transversale de la gaine A au-dessus du niveau des objets déjà placés c'est-à-dire à un endroit où la gaine A est, obligatoirement, neuve et propre. La soudure est de la sorte facilement obtenue, indépendamment des impuretés placées dans la gaine et qui pourraient s'opposer ou, tout au moins, gêner cette soudure tels que : huile, eau, objets rigides, etc... (Fig 9).

L'emballage qui vient d'être terminé n'est plus maintenu par pincement et, de plus, il pèse lourd puisqu'il est plein. Il tombe alors dans le fond du dispositif tandisqu'un nouvel emballage est disponible (figure 10).

Le cycle, ainsi, est terminé et peut être reproduit jusqu'à épuisement de la gaine A stockée sur le mandrin 6.

Selon les dimensions intérieures du châssis 1 et les dimensions extérieures des emballages obtenus, il faut évacuer ces derniers plus ou moins souvent. Sur la figure 10, on voit qu'il faut, pratiquement, évacuer les emballages un par un et, pour cela, on doit ouvrir la porte 2.

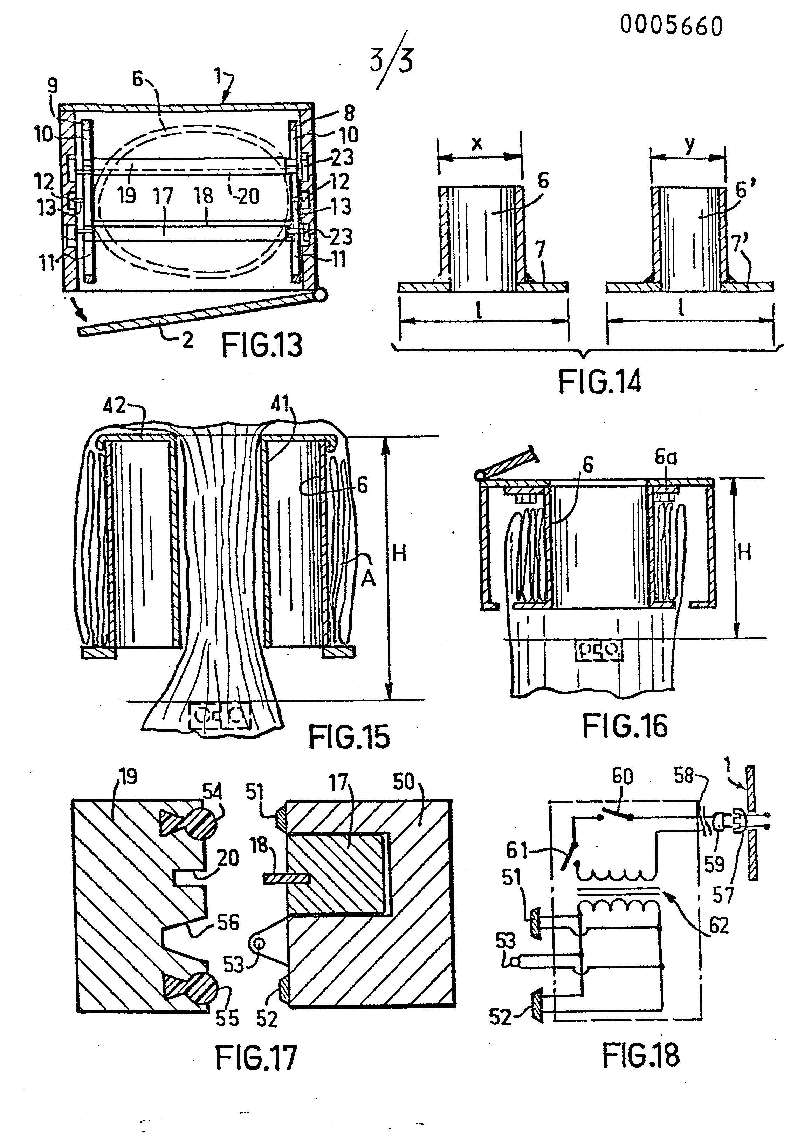

Pour simplifier encore le pénible problème des ordures ménagères, il est intéressant de pouvoir, le cas échéant, relier l'intérieur du dispositif à une conduite d'évacuation ainsi que cela est représenté sur la figure 11.

Sur cette figure, on voit que le dispositif est dans une position correspondant à celle de la figure 10 mais l'on voit aussi sur cette figure que l'emballage précédent est tombé sur un plan incliné 34 qui le dirige vers un orifice 35 qui communique soit directement, soit par tout autre moyen, avec une conduite d'évacuation B.

Naturellement, lorsque le dispositif est associé à une conduite d'évacuation, on peut installer ce dispositif non plus seulement dans une cuisine, par exemple, mais là où sa combinaison avec cette conduite est la plus simple (palier, escaliers, etc...).

Il ressort de la description ci-dessus que le dispositif conforme à l'invention permet de mettre à la disposition de l'usager un emballage de dimensions relativement importantes et qui correspond, par exemple, à la production moyenne d'ordures ménagères d'une journée d'un ménage de trois personnes.

Bien que le joint 5 du couvercle 3 s'applique sur le dessus du mandrin 6 et obture ainsi l'ouverture béante de la gaine A , les ordures et déchets placés dans l'emballage peuvent provoquer des odeurs désagréables puisqu'il faut attendre la fermeture de l'emballage pour assurer l'isolation parfaite de ces ordures.

Lorsque l'on a des ordures particulièrement malodorantes telles que des déchets de poissons, par exemple, il est avantageux de pouvoir les enfermer immédiatement dans un emballage étanche sans pour autant sacrifier le volume d'un grand emballage tel qu'il vient d'être décrit.

Il est donc intéressant de pouvoir, avec un seul et même dispositif, obtenir des emballages de dimensions différentes pour ce qui est de leur longueur puisque le diamètre de la gaine, lui, est invariable (sous réserve des indications données plus loin).

C'est ainsi qu'en se reportant à la figure 12, on voit comment un tel perfectionnement peut être obtenu conformément à l'invention.

On voit, en effet, que chaque boucle fermée sur elle-même, et constituant un élément de guide, comprend au moins un embranchement réunissant les deux brins respectivement 25 et 26 de chaque boucle afin de constituer au moins deux circuits de longueurs différentes, un par la boucle complète (25, 27, 26, 27) et l'autre par un embranchement et une partie de la boucle, ce qui correspond à la formation d'emballages ayant, eux-mêmes, des longueurs différentes.

Sur la figure 12, on n'a représenté qu'un seul embranchement ce qui signifie qu'avec un tel dispositif on peut créer deux emballages de longueurs différentes : un grand (tel qu'il est décrit ci-dessus) et un petit comme on va le décrire maintenant. Mais, si l'on veut, il est possible de prévoir plusieurs embranchements échelonnés.

En fonctionnement normal, le galet 12 parcourt le sillon 14 de haut en bas et de bas en haut, tandisque les galets 23 parcourent les brins 25 de haut en bas jusqu'à leur extrémité inférieure puis les brins opposés 26 pour remonter à leur position haute ainsi que cela a été décrit. Cela est indispensable pour "absorber" les emballages remplis selon le volume intérieur du mandrin 6.

Mais lorsque l'on veut créer un emballage moins haut, on arrête l'abaissement de la barre de manoeuvre 30 lorsque les galets 23 ont atteint la position qui est représentée sur la figure 12 par les références 12' et 23'. En remontant alors la barre de manoeuvre 30 avant que les galets 23 aient atteint la base des brins 25, les galets 23' doivent pouvoir, automatiquement, emprunter les embranchements 36 qui sont constitués par des sillons faisant communiquer les brins 25 et 26 et se raccordant à ceux-ci progressivement pour que les galets 23 soient guidés sans aucun à-coup.

On peut, de la sorte, envelopper des volumes restreints sans consommer une quantité excessive de gaine A.

On comprend que les galets 23 doivent être guidés vers les embranchements 36 et non pas remonter par les brins 25.

Il en est de même, d'ailleurs, à la base de ces éléments de guide lorsque les galets 23 sont dans leur position basse extrême indiquée sur la figure 12 par les références 23".

En d'autres termes, le dispositif selon l'invention prévoit que l'on dispose de moyens pour assurer le parcours de chaque boucle dans un sens unique et, dans le mode de réalisation ici représenté, ces moyens comprennent des cliquets de non retour sollicités chacun en position active par un ressort et placés à l'extrémité aval des brins 25, respectivement en amont des segments courbes inférieurs 27 et des embranchements 36.

En se reportant aux figures 1 et 12, on voit qu'à la partie inférieure des brins 25, se trouvent deux cliquets symétriques 37 qui sont montés sur un axe fixe 38 et qui sont sollicités par un ressort 39 vers la position où ils obturent les brins 25.

0005660

- 14 -

Leur forme est telle que les galets 23 peuvent facilement, lorsqu'ils descendent dans les brins 25, les repousser vers l'extérieur puis dépasser leur face inférieure de sorte qu'à ce moment les ressorts 39 ramènent brusquement les cliquets de non
retour 37 vers leur position d'origine telle qu'elle est représentée sur les figures 1 et 12.

Cette face inférieure des cliquets de non retour 37 est convenablement galbée pour reconstituer, en quelque sorte, un sillon
raccordé progressivement avec le segment courbe 27 de sorte que
les galets 23 ne peuvent qu'emprunter ces segments courbes 27 et les brins
opposés 26 puisqu'il leur est impossible de déplacer les cliquets de non
retour 37 qui sont appuyés contre l'une des parois des brins 25.

Les cliquets de non retour 40 correspondant aux embranchements
36 fonctionnent exactement sur le même principe que ceux qui
viennent d'être décrits et l'on voit que leur partie inférieure
est convenablement conformée pour reconstituer la paroi supérieure des embranchements 36 et, ainsi, guider sans à-coup les
galets 23 vers ces embranchements 36 tout en leur interdisant
le retour par les brins 25.

Ces moyens de condamnation de certaines parties du parcours des
galets 23 peuvent être réalisés par des moyens différents et,
par exemple, par de simples lames de ressort. Cependant, il est
à noter que ces éléments de guide étant très difficilement visibles et accessibles, il est intéressant de prévenir l'usager
que les galets 23 ont dépassé, soit les cliquets de non retour
40 pour lui permettre de remonter la barre de manoeuvre 30 et
constituer un petit emballage, soit les cliquets de non retour
37 pour lui permettre de remonter en temps voulu les galets 23
par les brins extérieurs 26 et constituer, ainsi, un grand
emballage.

Or, les cliquets de non retour tels qu'ils sont décrits ont
pour avantage de présenter une grande surface de contact avec
les parois des brins 25 de sorte que lorsque les galets 23 ont
dépassé, après les avoir repoussé, les cliquets de non retour,
ceux-ci sont brusquement ramenés en position active par leur ressort et cela provoque un bruit sec caractéristique et très facilement perceptible.

Il faut noter que les moyens pour assurer le parcours de chaque boucle dans un sens unique comprennent également la disposition inclinée des lumières 10 et 11 dans les flasques 8 et 9 car lorsque les pions 21 engagés dans ces lumières 10 et 11 sont en position basse extrême de l'ensemble mobile, le mouvement linéaire vertical des flasques 8 et 9 a pour effet de solliciter vers l'extérieur les pions 21 et, de ce fait, facilite le guidage des galets 23 vers les brins 26 (ou les embranchements 36).

Il ressort de la description ci-dessus, que les sillons 25, 26, 27 et éventuellement 36 constituent des organes qui provoquent automatiquement la mise en position active et la mise en position inactive des éléments de mâchoire 17 et 19 car lorsque les galets 23 qui assurent la coopération de ces éléments de mâchoire avec les éléments de guide, sont dans les brins 25, ils obligent les éléments de mâchoire 17 et 19 à être rapprochés l'un de l'autre en coopération,c'est-à-dire en position active. Lorsque les mêmes galets 23 sont dans les brins opposés 26 ils provoquent automatiquement l'écartement des éléments de mâchoire 17 et 19 et l'on note que la distance qui sépare les deux brins opposés 26 des deux boucles situées sur une même paroi latérale est au moins égale au diamètre de la gaine ouverte afin que les éléments de mâchoire 17 et 19 puissent remonter sans être gênés par la gaine remplie (figures 7, 8 et 9).

Le guide ainsi constitué par des sillons latéraux, peut être réalisé d'une manière différente dès lors que ce guide est constitué par deux éléments latéraux parallèles à l'axe de la gaine, situés face à face de part et d'autre de l'axe de ladite gaine, au droit de celui-ci et au-delà des flasques 7 et 8 et que chacun de ces flasques est muni d'au moins un organe de coopération avec cet élément de guide. Ainsi, par exemple, on pourrait remplacer les sillons dans lesquels pénètrent des galets par des guides en relief avec lesquels coopèrent des roues à gorge par exemple.

On comprend par la description ci-dessus que le volume des emballages est clairement indiqué à l'usager puisqu'il correspond à la capacité interne du mandrin 6.

Pour de multiples raisons, il peut être avantageux d'utiliser des gaines de différents diamètres sur un même dispositif.

Dans ce cas, il faut disposer de mandrins ayant les périmètres voulus. Une solution simple, consiste à choisir le mandrin voulu parmi ceux dont on dispose et sur la figure 14 on voit qu'une bonne solution consiste à rendre amovible le mandrin 6 (6' etc..) et le support (7, 7' etc...) dont il est rendu solidaire. On voit que si les diamètres (ou périmètres) x et y sont différents, la largeur 1 des supports reste constante.

Une autre solution consiste à obtenir automatiquement, sans calcul et sans maladresse, un volume plus faible que celui du mandrin 6, en place (éventuellement inamovible d'ailleurs) en jouant sur le diamètre et non sur la hauteur.

En effet, il serait pratiquement impossible, sans risque d'erreur, de remplir au 2/3 ou au 1/4 le volume du mandrin 6, dont le diamètre (ou périmètre) et la hauteur sont invariables.

Dans ce cas, au lieu de changer le mandrin 6, on place (figure 15) sur celui qui est en place une cheminée 41 munie d'une collerette 42 (ou de crochets espacés angulairement) et l'on force la gaine A à passer par l'intérieur de la cheminée 41 en formant des plis.

On peut, alors, remplir l'emballage constitué par la gaine ainsi conformée et pincée, par les éléments 17 et 19 de la mâchoire jusqu'au bord supérieur de la cheminée 41.

Lorsqu'une telle gaine sera tirée vers le bas, hors de la cheminée 41, elle sera en grande partie déplissée en aval de la cheminée 41 car les objets seront automatiquement contraints de s'étaler. On obtient ainsi un double effet : dossage correct et soudure parfaite.

Sur la figure 16, on voit un mode de réalisation selon lequel le mandrin 6 est fixé par une collerette supérieure 6 a, de telle manière que la gaine A est extraite par l'extérieur du mandrin 6. Un tel montage est recommandé quand la gaine à utiliser est très épaisse et, donc, dure, rigide, ce qui rend difficile son usage selon les configurations représentées sur les figures précédentes.

En se reportant maintenant aux figures 17 et 18, on voit que l'élément de mâchoire 17 peut recevoir par simple chevauchement une pièce en "U" 50 sur laquelle sont prévus tous les composants électriques voulus alimentés au moyen d'un fil souple pouvant être connecté au réseau par un élément tel que prise de courant, "domino" ou autres, prévu sur le bâti intérieur du dispositif, cet élément recevant, pour sa part, les conducteurs raccordés par une fiche à un réseau de distribution de courant.

Ainsi, grâce à ce montage très simple, il est possible de remplacer le dispositif électrique dans son ensemble quelle que soit la panne dont il est victime et cela en débranchant le fil souple relié à la pièce 50 et en retirant celle-ci à la manière d'un fusible. Une nouvelle pièce 50 munie de tous les composants électriques voulus en bon état est remise en place par chevauchement sur l'élément de mâchoire 17, puis le fil souple est à nouveau connecté au réseau par l'élément tel que la prise de courant par exemple.

Ainsi que cela est connu en soi, le mécanisme de soudure comprend une pane supérieure 51 et une pane inférieure 52 ainsi qu'un fil coupant 53.

Sur l'élément de mâchoire 19 sont prévues les contreparties, connues en soi, à ces divers mécanismes à savoir deux appuis par exemple en polytétrafluoréthylène 54 et 55 ainsi qu'une fente 56 permettant au fil 53 de passer à travers la gaine convenablement tendue.

Sur la figure 18 on voit que sur le bâti 1 du dispositif est prévu un élément tel qu'une prise de courant ou un "domino" 57 tandisque la pièce 50 est reliée à cet élément 57 par un fil souple 58 terminé ici par une fiche 59.

Sur l'un des deux conducteurs du fil 58, est placé un contact 60 qui est normalement en position ouverte et qui est fermé pour provoquer le passage du courant lorsque les éléments de mâchoire 17 et 19 sont dans la position de rapprochement voulue (figure 4, 9 et 11). La commande de ce contact 60 en fonction de l'emplacement des éléments 17 et 19 de la mâchoire est facilement réalisable par l'homme de l'Art et n'a donc pas à être décrite en détail ici.

Sur ce même fil se trouve un interrupteur à bilame 61 qui provoque automatiquement l'ouverture des circuits après un certain temps de chauffe.

Un transformateur 62 permet d'alimenter les panes de soudure 51 et 52 ainsi que le fil chauffant 53 avec une tension basse.

Selon une variante avantageuse, le fil souple 58 est supprimé. Pour cela, on peut par exemple utiliser un galet 23 conducteur de telle manière qu'il établit le circuit aux lieu et place du contact 60 lorqu'il atteint la position voulue pour la soudure et la coupe, du fait qu'il coopère avec un organe relié à une source de courant.

Il ressort de la description ci-dessus que le dispositif conforme à l'invention permet d'associer le mécanisme de déplacement vertical de la mâchoire à un guide qui doit provoquer la mise en position active et la mise en position inactive des éléments 17 et 19 à l'égard de leur activité mécanique comme à l'égard de leur activité électrique et, cela, selon des critères d'emplacement et/ou de durée.

On note, également, que la mise en route de l'élément moteur (ici la barre de manoeuvre 30 et les leviers 28 ainsi que les biellettes 31) est déterminée arbitrairement par l'utilisateur en fonction du degré de remplissage de l'emballage, ce remplissage étant réalisé graduellement ou en une seule fois par l'introduction d'objets à emballer à l'intérieur de la gaine A

0005660

maintenue béante par le mandrin 6.

Le dispositif conforme à l'invention est extrêmement rustique et peut recevoir de nombreuses applications, privées, collectives ou professionnelles.

Pour ce qui est des déchets ménagers, le dispositif conforme à l'invention peut être réalisé, comme représenté, sous forme d'un élément complet à lui seul ou bien être placé à l'intérieur d'un élément de cuisine donné, auquel cas il est avantageux de monter le châssis 1 du dispositif sur des rails de guidage grâce auxquels le dispositif peut être manoeuvré pour le placer à l'extérieur ou à l'intérieur de l'élément.

Il est également possible de poser le dispositif sur la partie intérieure d'une porte d'un élément de cuisine lorsque ce dispositif a des dimensions relativement modestes.

Mais un tel dispositif peut être appliqué au conditionnement d'objets autres que des déchets ménagers. Ainsi ce dispositif peut être utilisé dans les magasins en libre service qui disposent de caisses au-delà desquelles les objets achetés par les clients et comptabilisés par la caissière sont évacués au moyen de tapis roulants. Dans ce cas, le dispositif est placé en aval des caisses selon une inclinaison telle que les objets pénètrent automatiquement à l'intérieur de la gaine béante sans pour autant tomber à la verticale. En d'autres termes, le dispositif conforme à l'invention peut être placé horizontalement ou selon un angle plus ou moins incliné sur l'horizontale selon les impératifs pratiques.

Naturellement, un tel dispositif est utilisable quel que soit son degré d'inclinaison (y compris nul) et peut être manoeuvré aussi bien par le personnel du magasin, y compris les caissières, que par les clients eux-mêmes.

Ce dispositif peut également être utilisé pour la mise sous gaine de vêtements nettoyés ou teints. Il n'est pas nécessaire de préciser que ce dispositif peut être utilisé également pour

0005660

- 20 -

l'emballage de tous autres objets à l'unité ou en vrac, solides ou fluides.

Ce dispositif peut, également, être utilisé pour des cabinets
d'aisance tels que ceux que l'on trouve dans les avions, les
autocars, les véhicules de camping, etc...

Sur la figure 13, on a indiqué en trait pointillé le contour
du mandrin 6 et l'on voit que ce dernier a une section oblongue.
Elle pourrait être d'une autre forme, mais  une section oblongue dont le grand axe est parallèle aux éléments de la mâchoire, a l'avantage de présenter la gaine au pincement dans la
meilleure situation possible, ce qui évite, par exemple, la
formation de plis.

L'invention n'est pas limitée aux seuls modes de réalisation
décrits et représentés, mais en embrasse au contraire, toutes
les variantes.

REVENDICATIONS

1-Dispositif de conditionnement du type comprenant d'une part un mandrin creux avec lequel doit coopérer une gaine tubulaire et par lequel des objets à conditionner doivent être introduits jusqu'à l'intérieur de la gaine maintenue béante et, d'autre part, un mécanisme apte à la fermeture transversale effective de ladite gaine et un mécanisme apte à la coupe transversale de ladite gaine en vue de constituer un emballage unitaire indépendant qui est constitué par une fraction de gaine et qui est délimité par deux zones parallèles de fermeture, caractérisé en ce que la section du mandrin est choisie pour déterminer le volume utile maximum d'objets pour le remplissage d'un emballage unitaire, en fonction de la hauteur de remplissage qui est mesurée entre le sommet dudit mandrin et un mécanisme apte au pincement linéaire transversal de la gaine situé, en position haute au delà immédiat du mandrin, ce mécanisme étant mobile dans la direction axiale du mandrin entre ladite position haute dans laquelle il est maintenu immobile et actif et une position basse dans laquelle il est rendu inactif, ce mécanisme devant demeurer actif jusqu'à sa position basse afin d'entraîner positivement la gaine tandisqu'il doit être rendu inactif lorsqu'il est en position basse et maintenu ainsi jusqu'à son retour en position haute afin d'être séparé de la gaine.

2-Dispositif selon la revendication 1, caractérisé en ce que le mandrin est amovible afin de pouvoir, sélectivement, placer l'un de plusieurs mandrins de différents diamètres.

3-Dispositif selon la revendication 1, caractérisé en ce qu'il comporte au moins une cheminée amovible de diamètre inférieur à celui du mandrin et munie d'une collerette ou autre organe de liaison avec le mandrin, afin de pouvoir la placer à l'intérieur dudit mandrin et d'engager la gaine à l'intérieur de la cheminée pour déterminer un volume utile maximum de remplissage inférieur à celui que détermine le mandrin.

4-Dispositif selon la revendication 1, caractérisé en ce que le mécanisme apte à la fermeture transversale de la gaine ainsi que le mécanisme apte à la coupe de ladite gaine sont solidaires du mécanisme apte au pincement linéaire transversal de la gaine, ces trois mécanismes étant montés sur un ensemble mobile qui est associé à un guide parallèle à l'axe de la gaine et qui est relié à un élément moteur susceptible de déplacer cet ensemble entre deux positions extrêmes, décalées au-delà du mandrin le long de l'axe virtuel dudit mandrin et qui est associé à au moins un organe devant provoquer la mise en position active et la mise en position inactive des mécanismes selon des critères d'emplacement et/ou de durée, la mise en route de l'élément moteur étant arbitrairement déterminée par l'utilisateur en fonction du degré de remplissage du volume utile.

5-Dispositif selon la revendication 4, caractérisé en ce que le mécanisme apte au pincement linéaire transversal de la gaine est constitué par une mâchoire composée de deux éléments transversaux à l'axe de la gaine, dont la longueur est au moins égale au diamètre de la gaine ouverte et susceptibles d'être écartés l'un de l'autre sur une distance au moins égale au diamètre de la gaine ouverte et rapprochés l'un contre l'autre avec une force de serrage supérieure à la resistance que la gaine oppose à son déplacement axial.

6-Dispositif selon la revendication 5, caractérisé en ce que l'un des éléments de la mâchoire comprend au moins un relief susceptible de pénétrer dans un logement correspondant prévu sur l'autre élément.

7-Dispositif selon la revendication 4, caractérisé en ce que l'ensemble mobile est composé de deux flasques latéraux disposés perpendiculairement aux extrémités des éléments de la mâchoire.

8-Dispositif selon la revendication 7, caractérisé en ce que chaque extrémité des éléments de la mâchoire est munie d'un pion engagé dans l'une de deux lumières prévues dans chaque

0005660

- 23 -

flasque.

9-Dispositif selon la revendication 4, caractérisé en ce que le guide est constitué par deux éléments latéraux parallèles à l'axe de la gaine, situés face à face de part et d'autre de l'axe de la gaine, au droit de celui-ci et au-delà des flasques, chacun de ces derniers étant muni d'au moins un organe de coopération avec un élément de guide.

10-Dispositif selon la revendication 4, caractérisé en ce que l'un au moins des organes devant provoquer la mise en position active et la mise en postion inactive des mécanismes est constitué par deux paires d'éléments de guides latéraux placés face à face dans des plans parallèles de part et d'autre de l'axe de la gaine et au-delà des flasques, chacune des extrémités des éléments de la mâchoire étant munie d'au moins un organe de coopération avec l'un des susdits éléments latéraux, lesquels sont fermés en boucle afin que les brins voisins de deux boucles situées sur un même côté soient espacés d'une distance qui correspond à la position de rapprochement l'un contre l'autre des éléments de la mâchoire, tandisque les brins opposés sont espacés d'une distance qui correspond à la position d'écartement desdits éléments de la mâchoire, des moyens étant prévus pour assurer le parcours de chaque boucle dans un sens unique.

11-Dispositif selon les revendications 9 et 10, caractérisé en ce que les éléments de guide sont constitués par des sillons obtenus dans une même plaque, deux plaques identiques étant placées face à face et en ce que les organes de coopération sont constitués par des galets montés fous sur des axes fixes perpendiculaires au plan du fond du sillon, le diamètre des galets étant un peu inférieur à la largeur des sillons.

12-Dispositif selon la revendication 4, caractérisé en ce que l'élément moteur est constitué par au moins un levier latéral extérieur monté pivotant à l'une de ses extrémités et muni d'une biellette articulée d'une part sur ce levier et d'autre part sur l'ensemble mobile.

- 24 -

13-Dispositif selon les revendications 7 et 12, caractérisé en
ce que l'élément moteur comprend deux leviers latéraux extérieurs dont les extrémités libres sont réunies par une barre
de manoeuvre, la biellette de chaque levier étant articulée
à la partie supérieure et au milieu d'un flasque.

14-Dispositif selon la revendication 10, caractérisé en ce que
les moyens pour assurer le parcours de chaque boucle dans un
sens unique comprennent des cliquets de non retour, solicités chacun en position active par un ressort et placés à
l'extrémité aval des brins voisins des boucles.

15-Dispositif selon les revendications 8 et 10, caractérisé en
ce que les moyens pour assurer le parcours de chaque boucle
dans un sens unique comprennent la disposition inclinée des
lumières des flasques vers le centre du dispositif et vers
son aval en considérant le sens dans lequel la gaine doit
être déplacée.

16-Dispositif selon la revendication 10, caractérisé en ce que
chaque boucle fermée sur elle-même comprend au moins un embranchement réunissant les deux brins afin de constituer au
moins deux circuits de longueurs différentes, un par la boucle complète et l'autre par un embranchement et une partie
de la boucle, qui correspondent à la formation d'emballages
ayant, eux-mêmes, des longueurs différentes.

17-Dispositif selon les revendications 11 et 16, caractérisé en
ce que l'embranchement ou chaque embranchement, est constitué par un sillon qui débouche dans celui qui constitue le
brin voisin du centre et dans celui qui constitue le brin
éloigné du centre en s'y raccordant progressivement, un cliquet de non retour étant placé immédiatement en amont de
l'embranchement ou de chaque embranchement, dans le sillon
qui constitue le brin voisin du centre.

18-Dispositif selon la revendication 4, caractérisé en ce que
le mécanisme apte à la fermeture transversale de la gaine
et le mécanisme apte à la coupe de ladite gaine sont constitués de manière connue en soi, par des éléments chauffants, ces deux mécanismes étant prévus au sommet des branches d'une pièce en "U" dont l'espace intérieur a des dimensions telles que cette pièce puisse être placée, par chevauchement latéral, sur l'élément de la mâchoire qui est le plus accessible, tandisque l'autre élément porte les contreparties, connues en soi, de ces mécanismes, la pièce en "U" portant tous les composants électriques voulus alimentés par tout moyen connu.

FIG.1

FIG.2

0005660

2/3

FIG.3

FIG.4

FIG.5

FIG.6

FIG.7

FIG.8

FIG.9

FIG.10

FIG.11

FIG.12

0005660

FIG.13

FIG.14

FIG.15

FIG.16

FIG.17

FIG.18

**Office européen des brevets**

## RAPPORT DE RECHERCHE EUROPEENNE

Numéro de la demande

EP 79 40 0288

| DOCUMENTS CONSIDERES COMME PERTINENTS | | | CLASSEMENT DE LA DEMANDE (Int. Cl.²) |
|---|---|---|---|
| Catégorie | Citation du document avec indication, en cas de besoin, des parties pertinentes | Revendication concernée | |
| D | US - A - 3 452 368 (J.COUPER)<br><br>* Colonne 2, ligne 45 - colonne 4, ligne 65; figures *<br><br>-- | 1 | B 65 B 67/12<br>B 65 F 5/00<br>B 65 B 9/10 |
| A | FR - E - 75 342 (SACHERIE D'ARTOIS)<br><br>* Page 2, colonne I, ligne 24 - page 4, colonne II; ligne 5, figures *<br><br>---- | 1 | |

**DOMAINES TECHNIQUES RECHERCHES (Int. Cl.²)**

B 65 B
B 65 F

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 13-08-1979 | JAGUSIAK |

OEB Form 1503.1   06.78